(19) Europäisches Patentamt
European Patent Office
Office européen des brevets

(11) **EP 2 203 687 B1**

(12) **EUROPEAN PATENT SPECIFICATION**

(45) Date of publication and mention
of the grant of the patent:
**01.06.2011 Bulletin 2011/22**

(21) Application number: **08801367.7**

(22) Date of filing: **24.09.2008**

(51) Int Cl.:
*F24D 19/10* (2006.01)    *F24D 3/12* (2006.01)
*F24D 5/02* (2006.01)

(86) International application number:
**PCT/DK2008/000332**

(87) International publication number:
**WO 2009/039849 (02.04.2009 Gazette 2009/14)**

(54) **A MODEL PREDICTION CONTROLLED ENERGY SYSTEM**

ENERGIESYSTEM MIT MODELLVORHERSAGESTEUERUNG

SYSTÈME D'ÉNERGIE COMMANDÉ PAR PRÉDICTION PAR MODÈLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.09.2007 DK 200701376**

(43) Date of publication of application:
**07.07.2010 Bulletin 2010/27**

(73) Proprietor: **Danfoss A/S**
**6430 Nordborg (DK)**

(72) Inventors:
• **THYBO, Honglian**
**DK-6400 Sønderborg (DK)**
• **THYBO, Claus**
**DK-6400 Sønderborg (DK)**
• **LARSEN, Lars Finn Sloth**
**DK-6470 Sydals (DK)**

(56) References cited:
**EP-A- 1 801 508**          **WO-A-86/02988**
**WO-A-2004/025189**     **WO-A-2007/061357**
**DE-B3-102005 051 203**     **FR-A- 2 384 212**

**Description**

<u>Introduction</u>

The present invention relates to an energy system comprising at least one distributor for delivering released thermal energy to an indoor environment, and a controller for releasing energy based on a demand. The system further relates to a method of controlling release of thermal energy in an indoor environment.

<u>Background of the invention</u>

Systems for heating and/or cooling an indoor environment often comprise a source of thermal energy, e.g. an oil or gas fired central heating boiler, a cooler, or a heat exchanger, the source being coupled to district heating or electricity, a solar collector, a heat pump, etc. The source provides thermal energy which is bound in a medium which enables distribution of the energy to local areas of the environment. Typically, the medium is water or air. A distribution system typically consists of supply pipes and a circulation pump leading the medium to the local area and if the medium is water, the distribution system normally includes a return pipe for returning the water with a residue of the energy which was not released at the local area. The returned water is enriched in the source before being distributed to the local areas again. In the local areas, the thermal energy is released to the ambience through transmitters, e.g. consisting of a traditional radiator, a floor heating structure or consisting of similar thermal convection structures.

In a traditional central heating system, the source operates with a fixed temperature, e.g. 55 degrees Celsius. The medium is normally water which is circulated in the distribution structure between the source and the local areas at a constant flow rate. In superior systems, the distribution structure includes two strings, an upstream pipe leading the medium away from the source and a downstream pipe leading the medium towards the source. In this system, each transmitter is coupled between the upstream pipe and the downstream pipe. As a result, each transmitter receives the water with essentially the same temperature. In more simple systems, the distribution structure includes a single string extending between an outlet and an inlet of the source. The transmitters are inserted in a row one after the other. As a result, the first transmitter in the row receives water which is relatively hot compared with the water which is received by the last transmitter in the row.

Sometimes, the costs of operating the system are reduced by reducing the temperature of that portion of the medium which is distributed to the local areas. This can be done by mixing a portion of the returned water with a portion of the hot water from the source, e.g. by use of a bypass valve, e.g. an electrically operated bypass valve which is regulated based on the outdoor temperature, i.e. weather compensation. In more advanced central heating systems, weather compensation is facilitated in a more advanced way by operating the burner to provide a variable temperature in the boiler and optionally also by operating the circulating pump with a variable flow rate so that only an amount of the medium which is necessary for meeting the heating demand is circulated.

In the traditional systems, the inertia of the system is relatively high. If the heating demand suddenly increases, the boiler which typically forms part of a modern heating system may contain a relatively small amount of hot water "on storage". Except from this already existing stored energy, cold water must be heated up which takes a certain amount of time. The hot water from the boiler may almost instantaneously be distributed to radiators and floor heating pipes. However, depending on the shape, location and size of these systems, it may take a while to release the energy to the ambience and a temperature drop may occur. In a similar manner, overshooting may result from a system in which a large concrete floor has been heated to meet a heating demand which subsequently is reduced.

WO 2004/025189which represents the closest prior art and discloses all the features of the preamble of claim1, discloses a method for controlling the thermal flows in a building. The temperature is regulated by use of a) at least one target value, especially the desired temperature of the specific space, b) at least one general parameter that is characteristic of at least one variable inside and/or outside the building, which at least indirectly influences the temperature within the specific space, and c) at least one special parameter which is characteristic of the specific thermal flow conditions of the specific monitored space or the area of the specific space.

FR-A-2 384 212 discloses a water heating system with two energy sources, a heat accumulator which can be charged by the two energy sources, and a heat pump which can be connected to pump heat from the two energy sources. The device determines, under the given meteorological conditions and dependent on the various variables within the system, a favourable operational state with regard to costs.

WO 2007/061357 discloses a method of controlling the heating of a building. A forecast equivalent temperature for the building is calculated for chosen future points of time. The forecast is determined based on building specific characteristics and meteorological parameters. Finally, heat is supplied continuously in dependence on the forecast.

DE 10 2005 051203 discloses a method which involves determining time-dependent parameters e.g. outside temperature, which influences a thermal heat requirement of a heating system. A difference between the room and outside temperatures is determined. A variable dependent on one of the determined parameters and the difference between the room and outside temperatures is determined for calculating the thermal heat requirement.

Description of the invention

It is an object to improve existing energy systems e.g. for providing improved comfort, less temperature variations and improved economy.

Accordingly, in a first aspect, the invention provides a method of controlling a release of thermal energy in a building, the method comprising steps of:

- defining a control criterion for the building,
- defining a set of climate variables which influence the release of thermal energy in the building,
- defining for each climate variable, a climate signification index which defines the importance of that climate variable for the release of thermal energy In the building,
- receiving a set of predicted future climate variables, and
- combining the climate signification indices and the predicted future climate variables to provide control instructions for release of an amount of thermal energy In the building to satisfy the control criterion.

The method further comprises a step of defining a set of thermal comfort parameters which are significant for the wellbeing of a living being in the building, and defining for each thermal comfort parameter a corresponding comfort Signification index which defines the importance of that thermal comfort parameter for the wellbeing.

The thermal energy to be released may cause heating, cooling, or a combination thereof, thus the method may be used for controlling a pure heating system, a pure cooling system, or a system being able to deliver both heating and cooling to a building.

The control criterion may be defined dependent on the use of the building. As an example, a room temperature of 20 degrees Celsius with only a small deviation (e.g. from -0.5 degrees Celsius to +3 degrees Celsius) may be requested in an office, whereas a larger deviation may be allowed in houses and apartments. In cases without the possibility of applying cooling, it may be necessary to accept an even larger deviation from the desired temperature.

When setting up the control criterion, is may be important to consider that living beings do not feel the room temperature, instead they feel the heat loss from the body. Thus, the control criterion may in some embodiments not be based solely on room temperature. Also humidity and air velocity may be important factors when defining the control criterion.

As the amount of heat given off by the body through radiation may approximately be the same as the amount of heat given off by convection, a temperature based control criterion may be based on more than air temperature. Thus, it may in some cases be necessary to distinguish between e.g. air temperature and mean radiant temperature when defining the control criterion, the mean radiant temperature of an environment traditionally being defined as that uniform temperature of an imaginary black enclosure which would result in the same heat loss by radiation from a person as the actual non-uniform enclosure.

As measuring the temperature of all surfaces in the room and calculating the corresponding angle factors may be very time consuming, the use of the mean radiant temperature is often avoided. Instead the operative temperature or the equivalent temperature may be used. The operative temperature takes both radiation and convection into account and is therefore often a better indicator of thermal comfort. The operative temperature may be measured by the use of an operative temperature transducer.

Traditionally, the operative temperature is defined as the uniform temperature of a radiant black enclosure in which a person would exchange the same amount of heat by radiation and convection as in an actual non-uniform environment. The equivalent temperature is traditionally defined as the uniform temperature of a radiant black enclosure with zero air velocity in which a person would have the same dry heat loss as in the actual non-uniform environment, the dry heat loss being the non-evaporative heat loss.

A dry heat loss transducer may be used to measure the equivalent temperature. The dry heat loos transducer enables evaluation of the integrated effect of air temperature, mean radiant temperature and air velocity on the human body.

Climate variables which influence the release of thermal energy in the building may e.g. be outdoor air temperature, solar radiation, wind speed and wind direction, and humidity.

When defining a climate signification index for each of the climate variables the layout of the building, the insulation level, the orientation of the building, obstructions in the surroundings, etc. may be factors which have to be considered. E.g. for a building being fully surrounded by large trees, the climate signification index relating to wind speed and/or wind direction may be low. Furthermore, the climate signification index relating to solar radiation may be low if the building lies fully shaded. On the contrary, a building having large window areas and being non-shaded may have a high climate signification index relating to both solar radiation and wind.

By combining the climate signification indices for the building with a set of predicted future climate variables, control instructions can be provided in order to release an amount of thermal energy in the building to satisfy the defined control criterion.

The method may further comprise a step of defining a set of thermal comfort parameters which are significant for the wellbeing of a living being in the building, and defining for each thermal comfort parameter a corresponding comfort signification index which defines the importance of that thermal comfort parameter for the wellbeing.

The thermal comfort parameters may e.g. be air temperature, mean radiant temperature, air velocity, humidity, metabolism, clothing level, etc. Traditionally, metabolism is defined as the energy released by oxidation processes in the human body which depends on the muscular activity, and clothing level is defined as insulation value of the garment. Furthermore, radiant temperature asymmetry may be a thermal comfort parameter, the radiant temperature asymmetry traditionally being defined as the difference between the plane radiant temperature on two opposite sides of a small black element. As an example, a person being positioned with a large cold window on one side and a radiator on the other side may be uncomfortable even though the air temperature is within a range which usually is comfortable for the given person.

The corresponding comfort signification index for each of the thermal comfort parameters may depend on the type of building and the use of the building. As an example, temperature may have a higher comfort signification index in an old people's home than in a family house, since elderly people are normally seated a greater part of the day resulting in a lower activity level. Likewise, air velocity may have a high comfort signification index in an old people's home, since elderly people often are sensitive to draught.

Thermal energy may be released from different energy sources. As an example, heating may be released via radiators, floor heating system, air heating systems or a combination of one or more systems. Additionally, cooling may e.g. be released via an air cooling system. In addition hereto opening of windows may be a way to cool the building. Consequently, the method may further comprise a step of defining a set of cost variables each defining a cost value for the release of thermal energy in the building by using different energy sources. The set of cost variables may be based on energy costs for each of the sources in question and the efficiency of each of the sources.

The control criterion may be defined based on the set of cost variables and the set of thermal comfort parameters. Thus, the release of thermal energy may be based on a combination of cost variables and thermal comfort parameters. As an example, if is turns out that it would be very expensive to reach the desired air temperature due to the requirement for excessive cooling, a higher temperature may be accepted. The control criterion may in this way allow for adjustment of the resulting thermal environment in dependence of the energy costs of the energy sources in question.

Consequently, the method of controlling the release of thermal energy may be based on a performance function. By the use of a performance function it may thus be possible to adjust between comfort performance, i.e. the resulting thermal environment, and energy costs. As an example, the control instructions may be obtained by minimizing the output $\phi$ from the following performance function:

$$\phi = \frac{1}{2}\sum_{k=1}^{N}\left\|z_k - r_k\right\|_{Q_z}^2 + \frac{1}{2}\sum_{k=0}^{N-1}\left\|\Delta u_k\right\|_S^2 + \frac{1}{2}\sum_{k=0}^{N-1}\left\|u_k\right\|_P^2$$

where
N is a prediction horizon, i.e. the method may look N steps ahead,
u is a control variable being a vector including control variables for each thermal energy source, thus u may be the power into the building, k is a given time,
$z_k$ is the predicted output at time k, i.e. the output to be controlled, this could e.g. be the room temperature,
$r_k$ is an output reference or set-point at time k, e.g. a room temperature set-point of 20 degrees Celsius,
$Q_z$ is a weight matrix on the difference between predicted output and reference,
$\Delta u_k$ is the step of the control signal being equal to $u_k - u_k\text{-}1$,
S is a weight matrix on the step of the control signal, and
P is a weight matrix on the use of different energy sources.

The balance between energy use and the sensation of comfort may be achieved by adjusting the ratio between the weight matrices S, P and $Q_z$. As an example, the weight matrix $Q_z$ on the difference between the predicted output and the reference output, e.g. between the room temperature and the corresponding set-point, may be much larger than weight matrices S and P, whereby a difference between the room temperature and the reference room temperature will be heavily punished, thus resulting in a room temperature close to the set-point.

In a simplified example, the second term may be ignored. The predicted output $z_k$ may be seen as a function of the input u, since the predicted output $z_k$, in this example the room temperature, may depend on the power u into the building. Consequently, the performance function can be seen as a function of the power u with different weight factors on the different terms. Thus, the control instructions may be obtained by minimizing the performance function against u. Based on the performance function, the calculated power u may be the predicted optimal control input trajectory for the prediction horizon under the specified comfort parameters and the available energy sources and their system constraints. And the calculated value of the power u may be used as basis for the control instructions for the release of thermal energy.

In a non-simplified example, the second term may represent the change of the amount of power u into the building in each time step, and the penalty on changing of the power in each time step. The input signal step change could e.g. be an increased power need from the heating system due to an outdoor temperature drop, or due to opening of one or more windows in winter. This term is usually used for systems with actuators which have uneconomical performance or actuators with a life time depending heavily on the use thereof. When setting the penalty factor on this term, i.e. the weight matrix S, the controller will know whether comfort or economy (or life time of actuator) is more important. An example, when a window is opened suddenly in winter, the controller will ask for more power from e.g. a floor heating system in order to obtain the room temperature reference. This means that a higher inlet water temperature is needed in order to deliver more energy into room. If the hot water is supplied from a heat pump, the production of water at a higher temperature typically reduces the coefficient of performance (i.e. the production of water becomes more expensive). Therefore it has to be decided whether comfort or economy is more important when setting up the performance function. This may be done when selecting the weighting factors on different terms.

The method may further comprise a step of defining a set of source characteristics each defining a characteristic of a source of thermal energy. In a simplified embodiment, a source in the form of a floor heating system may be characterised as slow, whereas an air heating system may be characterised as quick. The control criterion may be defined based on the set of source characteristics.

Alternatively or additionally, the control criterion may be defined by using a PMV-model, the PMV-model being a Predicted Mean Vote model.

The Predicted Mean Vote model may be used for evaluation of thermal comfort conditions. The PMV scale may run from -3 to +3 and may be divided as follows:

| +3 | hot |
|----|-----|
| +2 | warm |
| +1 | slightly warm |
| 0 | neutral |
| -1 | slightly cold |
| -2 | cool |
| -3 | cold |

In one embodiment, the PMV value may be determined from the following equation, but it should be understood that other PMV-models may also be applicable.

$$
\begin{aligned}
PMV = \ & (0.303 \cdot e^{-0.036 \cdot M} + 0.028) \cdot ((M - W) \\
& - 3.05 \cdot 10^{-3} \cdot (5733 - 6.99 \cdot (M - W) - p_a) \\
& - 0.42 \cdot ((M - W) - 58.15) \\
& - 1.7 \cdot 10^{-5} \cdot M \cdot (5867 - p_a) - 0.0014 \cdot M \cdot (34 - t_a) \\
& - 3.96 \cdot 10^{-8} \cdot f_{cl} \cdot ((t_{cl} + 273)^4 - (t_{r,m} + 273)^4) - f_{cl} \cdot h_c \cdot (t_{cl} - t_a))
\end{aligned}
$$

where

$$t_{cl} = \quad 35.7 - 0.028 \cdot (M - W)$$
$$- 0.155 \cdot I_{cl} \cdot (3.96 \cdot 10^{-8} \cdot f_{cl} \cdot ((t_{cl} + 273)^4 - (t_{r,m} + 273)^4)$$
$$+ f_{cl} \cdot h_c \cdot (t_{cl} - t_a))$$

$$h_c = \quad 2.38 \cdot (t_{cl} - t_a)^{0.25} \qquad for\ 2.38 \cdot (t_{cl} - t_a)^{0.25} > 12.1 \cdot \sqrt{v_{ar}}$$
$$h_c = \quad 12.1 \cdot \sqrt{v_{ar}} \qquad for\ 2.38 \cdot (t_{cl} - t_a)^{0.25} < 12.1 \cdot \sqrt{v_{ar}}$$

$$f_{cl} = \quad 1.00 + 0.2 \cdot I_{cl} \qquad for\ I_{cl} < 0.5$$
$$f_{cl} = \quad 1.05 + 0.1 \cdot I_{cl} \qquad for\ I_{cl} > 0.5$$

and
M = Metabolism [W/m²],
W = External work [met], (equal to zero for most metabolisms),
$I_{cl}$ = Thermal resistance of clothing [clo], (1 clo = 0.155 m²K/W),
$f_{cl}$ = The ratio of the surface area of the clothed body to the surface area of the nude body,
$t_a$ = Air temperature [degrees Celsius],
$t_{r,m}$ = Mean radiant temperature [degrees Celsius],
$v_{ar}$ = Relative air velocity [m/s],
$p_a$ = Water vapour pressure [Pa],
$h_c$ = Convective heat transfer coefficient [W/m²K], and
$t_{cl}$ = Surface temperature of clothing [degrees Celsius].

The PMV-model may be used in the above-described performance function e.g. together with both costs and energy delivered from different energy sources. This may balance costs and energy use with comfort in an optimal way. The optimal output value of the PMV-model is zero, but due to the fact that human beings are different, an optimization of the PMV-model may not necessarily satisfy everyone. Experiments have shown that the best result attainable is dissatisfaction among 5% of a group. Any deviation from the thermal conditions specified by an output value of zero of the PMV-model may thus result in an increase in the percentage of dissatisfied.

As an example, a performance function incorporating a PMV-model could be expressed as:

$$\phi = \frac{1}{2} \sum_{k=0}^{N-1} \left\| \Delta u_k \right\|_S^2 + \frac{1}{2} \sum_{k=0}^{N-1} \left\| u_k \right\|_P^2 + (PMV)^2 \cdot v$$

where $v$ is a weight factor on the PMV index.

If a person prefers a cool or warm environment, the above performance function incorporating a PMV-model could e.g. be adjusted to:

$$\phi = \frac{1}{2} \sum_{k=0}^{N-1} \left\| \Delta u_k \right\|_S^2 + \frac{1}{2} \sum_{k=0}^{N-1} \left\| u_k \right\|_P^2 + (PMV + A)^2 \cdot v$$

where A is a constant expressing the preferred deviation from neutral.

Furthermore, the performance function may incorporate an acceptability function. An example of an acceptability function could be:

$$ACC=E\cdot a+b$$

where

ACC is an expression of acceptability,

E is the enthalpy of air, the enthalpy being dependent on both temperature and vapour content level, and a, b are pollution coefficients for the air, the coefficients being dependent on different pollutants and on pollution level.

By incorporating the acceptability function in the performance function, the heating system may be used to adjust the thermal environment and thus the sensation of comfort in case the humidity level cannot be changed. Alternatively, the building could be ventilated in order to achieve the expected level of acceptability.

In a second aspect, the invention provides a comfort control system for a building, the system comprising:

- means for receiving forecast data,
- input means for entering into the system a control criterion which is significant for a desired climatic condition of the building,
- means for determining a set of climate variables which influence the release of thermal energy in the building,
- means for determining for each climate variable, a climate signification index which defines the importance of that climate variable for the release of thermal energy in the building, and
- a data processing structure adapted to combine the climate signification indices and the forecast data to provide control instructions for the release of an amount of thermal energy in the building to satisfy the control criterion, characterised in that the comfort control system may comprise a data processing structure adapted to combine the forecast data with a group of comfort signification indices relating to thermal comfort parameters which are significant for the wellbeing of a living being in the building.

The forecast data may comprise weather data such as outdoor air temperature, solar radiation, wind speed and wind direction, and humidity. A simple comfort control system may receive only one or a few of these climate variables. Furthermore, the forecast data may comprise information on energy costs. As an example, the costs of district heating may be less expensive than the costs of electricity. By including energy costs in the forecast data it may be possible to choose between an energy source being coupled to district heating and an energy source being coupled to electricity. The reliability of energy supply may be a further forecast data.

As described above, the control criterion may be defined dependent on the use of the building. The climate signification indices may be determined based on the type of building including insulation level, orientation, etc., as also described above.

By combining the climate signification indices and the forecast data in a data processing structure it is possible to provide control instructions for the release of an amount of thermal energy in the building, thus satisfying the entered control criterion e.g. within a selected satisfaction range.

It should be understood, that the above-mentioned steps relating to the method of the first aspect of the invention may also be applicable to the control system of the second aspect of the invention.

The comfort control system may further comprise a release structure for releasing the thermal energy in the building. The release structure may comprise at least two structurally different release elements. As an example, an air heating system may be a release element which relatively quickly releases the required amount of thermal energy when receiving control instructions, whereas a floor heating system may be a release element which releases the required amount of thermal energy relatively slowly.

Furthermore, the comfort control system may comprise a data processing structure adapted to combine the forecast data with a group of characteristics relating to the release of thermal energy from the at least two release elements and to provide control instructions for sharing the release of the thermal energy between the at least two release elements. By adding such a data processing structure to the comfort control system, it may be possible to optimise a release of thermal energy from a plurality of energy sources. As an example, the forecast data may forecast the need of a certain amount of heating for the following day. The majority of this amount of heating energy may be released from e.g. a floor heating system which only relatively slowly reacts on demands. During the day, the actual need for heating energy may be higher, and the remainder amount of heating energy may be released from e.g. an air heating system which reacts relatively quickly on demands. If the actual need for heating energy turns out to be lower than the forecasted amount, cooling energy may be released from an air cooling system, if such a system is present.

In another embodiment, the control system may be set-up so that e.g. a floor heating system releases an amount of heating which is e.g. 15% lower than the forecasted amount of heating needed. During the day, the actual need for heating energy may consequently be higher, and the remainder amount of heating energy may be released from e.g. an air heating system which reacts relatively quickly on demands. This control strategy may be especially relevant in buildings without a cooling system. Furthermore, this strategy may have the advantage that the floor heating does not release too much energy. Especially, in buildings applying a floor heating system in wooden floors this may be an advantage since a too high temperature of a wooden floor may ruin the floor.

Traditionally, a ventilation system is installed with an internal heat exchanger, i.e. a heat recovery unit, for the purpose of saving energy during the heating season. Thus, inlet air from the cold outdoor heat may be heated by heat recovered from the exhaust air. Some ventilation systems may comprise heating elements, allowing the ventilation system to act as a release element which relatively quickly releases the required amount of thermal energy when receiving control instructions. Therefore, a ventilation system comprising a heating element may be combined with a floor heating system, thus providing a system with two structurally different release elements, a relatively fast reacting release element and a relatively slow reacting release element.

The heat recovery unit may be by-passed in summer allowing for the ventilation system to be used as a cooling device in some periods of the year. During summer, when the indoor air is warm, and the outdoor temperature especially in the evenings may be lower than the indoor temperature, the ventilation system may be used as a cooling device, i.e. a 'negative' heat emitter.

When the indoor air temperature is lower than the outdoor air temperature, the heat exchanger may be used to maintain the lower temperature. As an example in the afternoon, when the indoor air is e.g. 22 degrees Celsius and the outdoor air is e.g. 28 degrees Celsius, ventilation may still be needed due to the level of $CO_2$ concentration. The heat exchanger may thus be used to ensure that the temperature of the inlet air is lower than 28 degrees Celsius.

A heating element in a ventilation system can be installed in a central heating duct after the heat exchanger to heat up air which is guided to a plurality of rooms, or the heating element could be arranged in inlet ducts into separate rooms to heat up the rooms individually. When the heating unit is installed in the central duct and some of the rooms need heating from a relatively fast reacting release structure, while other rooms do not, a time schedule strategy may be used, e.g. in order to close the valves to the rooms where heating is not needed during the heating period.

As an example, the forecast data may be combined with one of more of the following parameters; air temperature, mean radiant temperature, operative temperature, equivalent temperature, air velocity, humidity, metabolism, and clothing level. Alternatively or additionally, the forecast data may be combined with a PMV-model, e.g. the above-described PMV-model.

Brief description of the drawing

Embodiments of the invention will now be further described with reference to the drawing, in which:

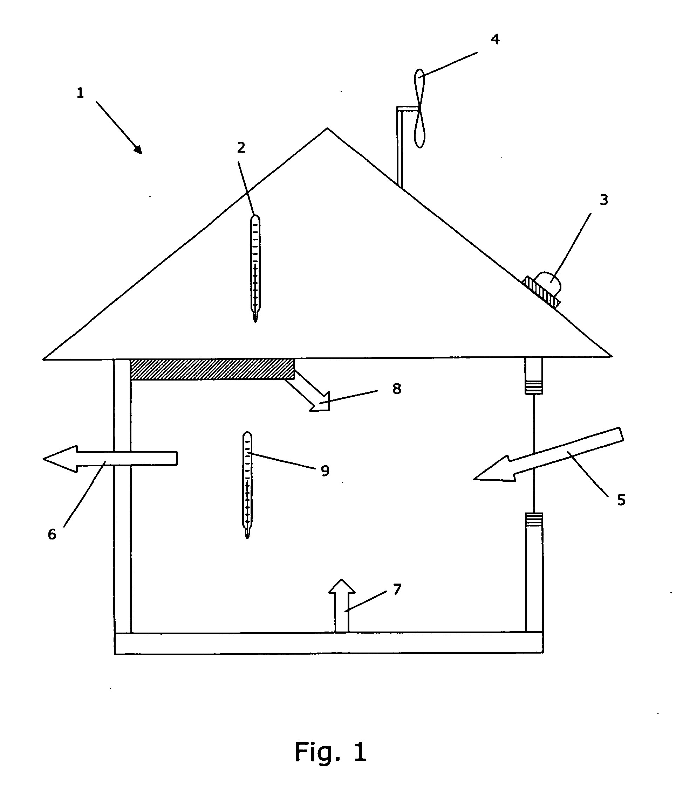

Fig. 1 is a schematic view of a room and the release and loss of thermal energy.

Detailed description of the drawing

Fig. 1 illustrates a building 1 equipped with an outdoor thermometer 2, a solar sensor 3, and an anemometer 4. The outdoor thermometer 2 measures the outdoor air temperature. The solar sensor 3 measures the total solar radiation. In an alternative embodiment, a solar sensor system measuring both direct radiation and total solar radiation may be applied. The anemometer 4 measures the wind direction and the wind speed. Furthermore, a humidity sensor (not shown) is applied.

Each of the arrows 5-8 illustrates an energy flow. The arrow 5 illustrates the energy supplied to the building 1 from incident solar radiation. The arrow 6 on the other hand illustrates the heat loss from the building 1 through walls, windows, the roof, the floor, etc. The arrow 7 illustrates energy supplied to the building 1 from a floor heating system, i.e. a relatively slowly responding thermal energy source, whereas the arrow 8 illustrates energy supply from an air system, i.e. a relatively quick responding thermal energy source. The air system may supply both heated and cooled air depending on the control instructions received from the comfort control system (not shown).

In the building an indoor thermometer 9 is located. The indoor thermometer 9 measures the indoor air temperature which in this case is used as control criterion. In other cases e.g. a humidity sensor and an operative temperature transducer may supplement the indoor thermometer 9 in order to set up a control criterion based on more factors. The indoor thermometer 9 is connected to the comfort control system in order to transmit indoor air temperature data hereto.

Weather forecast data in the form of outdoor air temperature, solar radiation, wind speed, wind direction, and humidity are automatically entered into the comfort control system. The forecast data are received via a computer connection from e.g. a weather forecast institute. Based on climate signification indices which are based e.g. on information about the insulation level of the building, use of the building, obstructions in the surroundings, etc., a forecast of the need for energy supply is calculated by the comfort control system. A major part of the needed energy is released from the floor heating system as indicated by arrow 7. The release is triggered by control instructions from the comfort control system. The effect on the control criterion, i.e. in this case the indoor air temperature is measured by the indoor thermometer 9 and data are returned to the comfort control system.

Based on the actual weather data which are measured by the outdoor thermometer 2, the solar sensor 3, the anemometer 4 and the humidity sensor (not shown), an actual need of energy is calculated and control instructions are provided from the comfort control system to the air system for the release of the remainder amount of energy. The arrow 8 indicates the release of cooled or heated air in response to the control instructions. If a window is opened in the building, the actual need of energy may be different from the calculated actual need of energy which is based only on weather data and climate signification indices. Thus, the opening of a window may be seen as disturbance to the expected performance. The measurement of the indoor air temperature and other control criterion may thus be used as correction factors to the comfort control system.

If information about the measured control criterion is stored in the comfort control system together with information on forecast weather data, actual weather data, and climate signification indices, the measurement of the control criterion may build an adaptive system which facilitates the release of thermal energy at a given time.

**Claims**

1. A method of controlling a release of thermal energy in a building, the method comprising steps of:

   — defining a control criterion for the building,
   — defining a set of climate variables which influence the release of thermal energy in the building,
   — defining for each climate variable, a climate signification index which defines the importance of that climate variable for the release of thermal energy in the building,
   — receiving a set of predicted future climate variables, and
   — combining the climate signification indices and the predicted future climate variables to provide control instructions for release of an amount of thermal energy in the building to satisfy the control criterion,

   **characterised in that** the method further comprises defining a set of thermal comfort parameters which are significant for the wellbeing of a living being in the building, and defining for each thermal comfort parameter a corresponding comfort signification index which defines the importance of that thermal comfort parameter for the wellbeing.

2. A method according to any of the preceding claims, further comprising a step of defining a set of cost variables each defining a cost value for the release of thermal energy in the building by using different energy sources.

3. A method according to claims 1-2, wherein the control criterion is defined based on the set of cost variables and the set of thermal comfort parameters.

4. A method according to any of the preceding claims, comprising a step of defining a set of source characteristics each defining a characteristic of a source of thermal energy.

5. A method according to claim 4, wherein the control criterion is defined based on the set of source characteristics.

6. A method according to any of the preceding claims, wherein the control criterion is defined by using a PMV-model, the PMV-model being a Predicted Mean Vote model.

7. A comfort control system for a building, the system comprising:

   — means for receiving forecast data,
   — input means for entering into the system a control criterion which is significant for a desired climatic condition of the building,
   — means for determining a set of climate variables which influence the release of thermal energy in the building,
   — means for determining for each climate variable, a climate signification index which defines the importance of that climate variable for the release of thermal energy in the building, and
   — a data processing structure adapted to combine the climate signification indices and the forecast data to provide control instructions for the release of an amount of thermal energy in the building to satisfy the control criterion,

   **characterised in that** the system further comprises a data processing structure adapted to combine the forecast data with a group of comfort signification indices relating to thermal comfort parameters which are significant for the wellbeing of a living being in the building.

8. A system according to claim 7, further comprising a release structure for releasing the thermal energy in the building, the release structure comprising at least two structurally different release elements.

9. A system according to claim 8, comprising a data processing structure adapted to combine the forecast data with a group of characteristics relating to the release of thermal energy from the at least two release elements and to provide control instructions for sharing the release of the thermal energy between the at least two release elements.

**Patentansprüche**

1. Ein Verfahren zur Regelung einer Freigabe von thermischer Energie in einem Gebäude, wobei das Verfahren die folgenden Schritte umfasst:

   - Bestimmung eines Regelkriteriums für das Gebäude,
   - Bestimmung von einem Satz Klimavariablen, die die Freigabe von thermischer Energie im Gebäude beeinflussen,
   - Bestimmung eines Klimabedeutungsindexes für jede Klimavariable, der die Bedeutung dieser Klimavariable für die Freigabe von thermischer Energie im Gebäude bestimmt,
   - Empfang eines Satzes von vorausgesagten Klimavariablen, und
   - Kombinieren der Klimabedeutungsindexe und der vorausgesagten Klimavariablen um Regelaufträge für die Freigabe einer thermischen Energiemenge im Gebäude um das Regelkriterium zu befriedigen,

   **dadurch gekennzeichnet, dass** das Verfahren zusätzlich die Bestimmung eines Satzes von thermischen Komfortparametern umfasst, die für das Wohlbefinden eines sich im Gebäude aufhaltenden Lebewesens wichtig sind, und Bestimmung für jeden thermischen Komfortparameter einen entsprechenden Komfortbedeutungsindex, der die Bedeutung dieses thermischen Komfortparameters für das Wohlbefinden bestimmt.

2. Ein Verfahren nach Anspruch 1, **dadurch gekennzeichnet, dass** zusätzlich ein Schritt zur Bestimmung von einem Satz von Kostenvariablen umfasst ist, wobei jeder Satz einen Kostenwert für die Freigabe von thermischer Energie im Gebäude unter Anwendung verschiedener Energiequellen bestimmt.

3. Ein Verfahren nach Anspruch 1 oder 2, **dadurch gekennzeichnet, dass** das Regelkriterium auf Grund des Satzes von Kostenvariablen und des Satzes von thermischen Komfortparametern bestimmt wird.

4. Ein Verfahren nach jedem der vorhergehenden Ansprüche, **dadurch gekennzeichnet, dass** ein Schritt zur Bestimmung von einem Satz von Quellencharakteristiken umfasst ist, wobei jeder Satz eine Charakteristik einer thermischen Energiequelle bestimmt.

5. Ein Verfahren nach Anspruch 4, **dadurch gekennzeichnet, dass** das Regelkriterium auf Grund des Satzes von Quellencharakteristiken bestimmt wird.

6. Ein Verfahren nach jedem der vorhergehenden Ansprüche, **dadurch gekennzeichnet, dass** das Regelkriterium unter Anwendung eines PVM-Modells bestimmt wird, wobei das PVM-Modell ein "Predicted Mean Vote" Modell ist.

7. Ein Komfortregelungssystem für ein Gebäude, wobei das System Folgendes aufweist:

   - Mittel zum Empfang von vorhergesagten Daten
   - Eingabemittel zur Eingabe in das System von einem Regelkriterium, das für einen gewünschten klimatischen Zustand des Gebäudes bedeutend ist,
   - Mittel zur Bestimmung von einem Satz von Klimavariablen, die die Freigabe von thermischer Energie im Gebäude beeinflussen,
   - Mittel zur Bestimmung eines Klimabedeutungsindexes für jede Klimavariable, der die Bedeutung dieser Klimavariable für die Freigabe von thermischer Energie im Gebäude bestimmt,
   - Eine Datenverarbeitungsstruktur für das Kombinieren des Klimabedeutungsindexes und der vorhergesagten Daten zur Ausgabe von Regelaufträgen für die Freigabe einer thermischen Energiemenge im Gebäude zur Befriedigung des Regelkriteriums,

**dadurch gekennzeichnet, dass** das System außerdem eine Datenverarbeitungsstruktur für das Kombinieren der vorhergesagten Daten mit einer Gruppe von Komfortbedeutungsindexen in Verbindung mit den thermischen Komfortparametern, die für das Wohlbefinden eines Lebewesens im Gebäude wichtig sind.

8. Ein System nach Anspruch 7, **dadurch gekennzeichnet, dass** zusätzlich eine Freigabestruktur zur Freigabe der thermischen Energie im Gebäude vorgesehen ist, die zumindest zwei strukturell unterschiedliche Freigabeelemente aufweist.

9. Ein System nach Anspruch 7, **dadurch gekennzeichnet, dass** eine Datenverarbeitungsstruktur vorgesehen ist, die die vorhergesagten Daten mit einer Gruppe von Charakteristiken kombiniert, die die Freigabe von thermischer Energie von den mindestens zwei Freigabeelementen betrifft, und die die Regelaufträge für die Teilung der Freigabe der thermischen Energie zwischen den mindestens zwei Freigabeelementen abgibt.

**Revendications**

1. Procédé de commande d'une libération d'énergie thermique dans un bâtiment, le procédé comprenant les étapes consistant à :

   - définir un critère de commande pour le bâtiment,
   - définir un jeu de variables de climat qui influencent la libération d'énergie thermique dans le bâtiment,
   - définir pour chaque variable de climat, un indice de signification de climat qui définit l'importance de cette variable de climat pour une libération d'énergie thermique dans le bâtiment,
   - recevoir un jeu de variables de climat futur prédit,
   - combiner les indices de signification de climat et les variables de climat futur prédit pour fournir des instructions de commande pour la libération d'une quantité d'énergie thermique dans le bâtiment pour satisfaire le critère de commande,

   **caractérisé en ce que** le procédé comprend en outre les étapes consistant à définir un jeu de paramètres de confort thermique qui sont significatifs pour le bien-être d'un être vivant dans le bâtiment, et définir pour chaque paramètre de confort thermique un indice de signification de confort correspondant qui définit l'importance de ce paramètre de confort thermique pour le bien-être.

2. Procédé selon la revendication précédente, comprenant en outre l'étape consistant à définir un jeu de variable de coût définissant chacune une valeur de coût pour la libération d'énergie thermique dans le bâtiment en utilisant différentes sources d'énergie.

3. Procédé selon les revendications 1 à 2, dans lequel le critère de commande est défini d'après le jeu de variables de coût et le jeu de paramètres de confort thermique.

4. Procédé selon l'une quelconque des revendications précédentes, comprenant une étape consistant à définir un jeu de caractéristiques de source définissant chacune une caractéristique d'une source d'énergie thermique.

5. Procédé selon la revendication 4, dans lequel le critère de commande est défini d'après le jeu de caractéristiques de source.

6. Procédé selon l'une quelconque des revendications précédentes, dans lequel le critère de commande est défini en utilisant un modèle PMV, le modèle PMV étant un modèle de vote moyen prédit.

7. Système de commande de confort pour un bâtiment, le système comprenant :

   - un moyen pour recevoir des données de prévision,
   - un moyen d'entrée permettant d'entrer dans le système un critère de commande qui est significatif pour une condition climatique souhaitée du bâtiment,
   - un moyen pour déterminer un jeu de variables de climat qui influencent la libération d'énergie thermique dans le bâtiment,
   - un moyen pour déterminer pour chaque variable de climat, un indice de signification de climat qui définit l'importance de cette variable de climat pour la libération d'énergie thermique dans le bâtiment, et

- une structure de traitement de données adaptée pour combiner les indices de signification de climat et les données de prévision pour fournir des instructions de commande pour la libération d'une quantité d'énergie thermique dans le bâtiment pour satisfaire le critère de commande,

**caractérisé en ce que** le système comprend en outre une structure de traitement de données adaptée pour combiner les données de prévision avec un groupe d'indices de signification de confort relatifs à des paramètres de confort thermique qui sont significatifs pour le bien-être d'un être vivant dans le bâtiment.

8. Système selon la revendication 7, comprenant en outre une structure de libération permettant de libérer l'énergie thermique dans le bâtiment, la structure de libération comprenant au moins deux éléments de libération structurellement différents.

9. Système selon la revendication 8, comprenant une structure de traitement de données adaptée pour combiner les données de prévision avec un groupe de caractéristiques relatives à la libération d'énergie thermique à partir des au moins deux éléments de libération et pour fournir des instructions de commande permettant de partager la libération de l'énergie thermique entre les au moins deux éléments de libération.

**Fig. 1**

**EP 2 203 687 B1**

## REFERENCES CITED IN THE DESCRIPTION

### Patent documents cited in the description

- WO 2004025189 A
- FR 2384212 A
- WO 2007061357 A
- DE 102005051203